# EUROPEAN PATENT SPECIFICATION

(11) **EP 0 650 906 B1**
(45) Date of publication and mention of the grant of the patent: **22.10.1997**
(21) Application number: 94500136.0
(22) Date of filing: 26.07.1994
(51) Int. Cl.: B65D 81/34, H05B 6/64

(54) **Container for producing popcorns in a microwave oven**
Behälter zum Herstellen von Popcorn in einem Mikrowellenofen
Récipient pour préparer du mais éclaté dans un four à micro-ondes

(30) Priority: 28.07.1993 ES 9302123 U
(43) Date of publication of application: 03.05.1995
(73) Proprietor: PLASTICOS DE GALICIA, S.A., 36210 Vigo (Pontevedra) (ES)
(72) Inventor: Villar Otero, Domingo, E-36210 Vigo (ES)
(74) Representative: De la Fuente Fernandez, Dionisio

(56) References cited:
- DE-A- 4 201 264
- US-A- 4 477 705
- US-A- 4 563 561
- US-A- 4 823 683
- US-A- 4 942 277
- US-A- 5 310 981

## Description

### OBJECT OF THE INVENTION

The present specification refers to a container for producing popcorns in a microwave oven, the obvious purpose of which is to provide a container being capable of withstanding, owing to its own characteristics with regard to the material used, the temperature prevailing inside the oven, the transformation of the grains of corn into popcorns being carried out inside said container during its permanence in the oven for a predetermined time, with the help, of course, of the ingredients necessary for cooking this product, such as an adequate amount of salt and oil.

### FIELD OF THE INVENTION

This invention is applicable to the industry devoted to the manufacture of cooking containers, especially made of a plastic material.

### BACKGROUND OF THE INVENTION

It is known by the Patent U.S. No. 4.563.561 an utensil applicable to grains to be swollen, such as corn grains, being usable whitin a microwave since it is built in a transparent material for this type of radiation. This utensil is constituted by two mutually adaptable receptacles, in invested respective positions, the lower or swollen receptacle having a chamber delimited by downwardly converging walls, while the upper receptacle or lid possesses a cavity in which interior the swollen grains are received, having on its upper base suitable openings to evacuate the steam detached by the grains when are swollen. These openings are distributed close the upper external edge, throughout all the perimeter of the corresponding base. When both receptacles are held together the upper receptacle open edge becomes adapted to a rising elevation and to a perimetral seat provided in the lower receptacle open edge, both receptacles having furthermore in their faced edges external perimetric flaps, the lower being wider than the upper, said flaps becoming into contact when both receptacles are together, and having lateral projections in faced opposed positions which are used in a manner of handles for the manipulation of the ensemble. The mentioned receptacles have a frustrumpyramidal form with a quadrangular base, and the lower is fitted with a deposit for the receipt of a butter portion, being said deposit delimited by a lower concave surface and by the side walls, departing from the lower part of the deposit a series of segments in -the form of ribs, mutually spaced, which radially extended to direct the melted butter toward the periphery of said deposit.

It is also known by the Patent U.S. No. 4.823.863 a blower for popcorns suitable to be used within a microwave oven, which is built in a material transparent to the microwaves energy, comprising a receptacle built in the manner of bowl, to which a circular flat lid has been adapted, the mentioned lid having radial openings uniformly distributed through an extreme stripe or circular crown area. The mentioned receptacle is charged with storing inside the swollen and not swollen kernels and has a downwardly tapered lower section in which there exists an inner area provided with depressions which length is geater than their width. Said depressions are provided of lengthened segments radially extended from the center zone until the vicinity of the walls.

### DESCRIPTION OF THE INVENTION

The basic object of the present invention is the construction of a container to produce popcorns, built in an appropriate material for its utilization in the interior of a microwave oven, contributing for a more simple and versatile solution than those provided by the means presently known in the current art, and which becomes easy to be manufactured and comfortable to be manipulated by the user.

This object has been achieved through the container of the present invention, in which interior the grains are housed for their subsequent transformation by the application of the microwave energy, the upper base of the container being provided with a wide opening through which it is provided an access to its inner space, and the mentioned opening being surrounded by a horizontal flap as a constituent part of the own upper wall which prevents that the grains leave out during the transformation stage of those.

In a most specific way, the container for producing popcorns in a microwave oven proposed by the present invention, is constituted starting from two parts preferably made of a rigid plastic material capable of withstanding the temperature prevailing within an oven.

One of said parts, specifically the one located on the base, has a plan quadrangular shape, the vertices of which are rounded, existing in the internal zone some depressions having the plan shape of a cross, directed from the center toward the four vertices, delimited by downwardly convergent walls, terminating in extremes with triangular shape smooth surfaces. This part has, on its lower face, four protuberances acting as legs or as a support, what evidently provides furthermore to the ensemble the possibility of being directly used as a recipient of service after being supported on any appropriate surface.

In the middle zone of two opposite branches of the lower part, there are at least two outwardly projected emerging tabs, to affix said lower part to said upper part by using flanges or projections located at faced positions on the upper part, the arrangement of these parts being open to be changed, that is to say, the upper part can have the fastening tabs or projections, while the lower part can have the retaining links fitted on it, what will provide an equivalent affixing system with the same results.

The upper body is higher than the one provided on the lower side, the said upper body having a plurality of ventilation windows provided on the middle portion of their side walls, having on the upper side or upper face a wide opening capable of adopting any convenient configuration, provided always that there is, around its perimeter, a space the function of which is to avoid the popcorns to come out due to their expansion when the corn grains open.

The mentioned upper part has, of course, near its lower edge, a perimetric projection the function of which is to act as a fitting element into the part provided on the lower portion.

In synthesis, it can be said that the object of the invention is constituted by a lower body made, like the upper body, of a heat-resistant material having prismatic recesses provided on its middle part, and at least two emerging tabs or flanges which outwardly extend from its perimetric portion allowing the upper body to be supported.

The upper body, as already mentioned, is higher than the lower body and has small ventilation windows or holes provided on its side walls, having on two opposed sides some sloped external protuberances in coincident positions with the tabs of the lower body, in order that said bodies may be fixed.

Of course, the bonding system can be replaced by a simple fitting allowing both bodies to be fastened, and, at the same time, it allows for an easy opening by a simple pressure of fingers, making good use of the material supplenes.

### BRIEF DESCRIPTION OF THE DRAWINGS

In order to complement this description and to aid to a better understanding of the features of the invention, the accompanying drawings, which are a part of this specification, show in an illustrative but non limitative sense, the following:

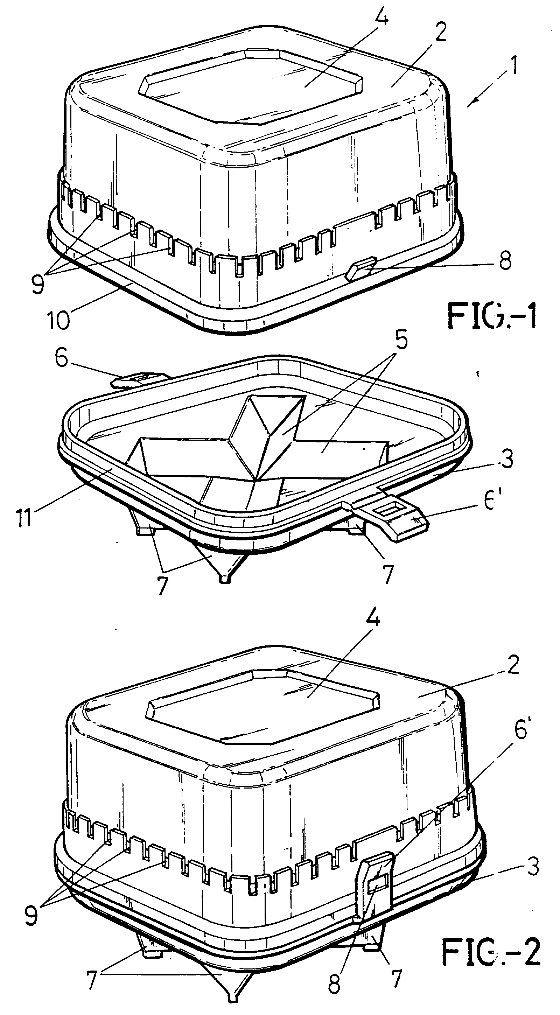

Figure 1 is a perspective view of the receiver for producing popcorns in an microwave oven, being separately appreciated in this Figure the two parts composiong it.
Figure 2 is a perspective view of the object shown in the Figure 1, with the two parts forming it being bonded one to the other by means of the fixing tabs and protuberances.

### DETAILED DESCRIPTION OF THE PREFERRED EMBODIMENT

From these Figures, it can be seen that the container for producing popcorns in a microwave oven (1) is constituted starting from two parts (2) and (3), made of a heat-resistant plastic material which withstands the temperature prevailing inside the oven, the upper part (2) being constituted as a hollow body adopting a plan quadrangular shape. Said body has a wide opening (4) on its upper part, which is perimetrically surrounded by a horizontal frame-like flap which impedes the grains of corn coming outside, these corn grains being located inside the lower part (3), when they are open and are ejected by their own force.

The upper body (2) has a plurality of ventilation holes (9) located in the lower middle zone of its side walls, and, also, two sloped protuberances (8) located in a middle zone of two opposite walls (others can be optionally incorporated), the function of which is to act as a fastening means for the tabs (6, 6') provided in the lower part (3) on two of its opposed walls, in positions faced to those for the joining of both upper and lower bodies. As will be understood by the skilled in the art, said protuberances and tabs could be substituted by any conventional system providing the same final purpose, that is to say, the solidary joining between the mentioned upper and lower bodies.

The part (2) has, on its lower zone and perimetricaly surrounding a lower mouth of this part (2), a perimetric projection (10) to be used as a fitting element on a stepping (11) existing on the lower part (3).

The mentioned lower part (3) has in its central portion prismatic depressions (5) adopting the form of a cross, and acting as supporting legs for the ensemble, and ending in triangular surfaces directed to the corners of the base.

As can be seen from Figure 2, the parts (2) and (3) are bonded one another by means of lugs or flanges (6, 6'), fitted with a transverse center perforation in which the respective protuberances (8) of the mentioned upper part (2) are introduced.

These closing elements could be obviated, if necessary, being used only the fitting means (10) and (11) for joining both parts, the container acting in a similar manner.

## Claims

1. A container for producing popcorns in a microwave oven, constituted by an upper body (2) and a lower body (3) in which the corn grains are deposited, being both mutually adaptable by means of an external perimetric projection (10) provided on the upper body to surround its open lover edge and a perimetric stepping provided on the open upper edge of the lower body (3) delimited by an also perimetric internal elevation (11), the lower body being fitted with internal depressions (5)in its base, characterized in that the upper body (2) has on its upper wall a wide opening (4) delimited by a perimetric frame-like flap being a constituent part of the upper wall, the upper body furthermore having a plurality of small size ventilation windows (9), distributed in its side walls according to a perimetric line located at an intermediate height; in that said depressions (5) of the lover body (3) adopt the form of a cross configured in prismatic form, being delimited by side walls which are downwardly converging and are termined in their respective extremes by means of smooth triangular surfaces, said depressions (5) forming legs and being directed from the center of the base of the lower body (3) toward the corners of the base, and in that the height of the upper body (2) is substantially greater than the height of the lower body (3).

2. A container according to claim 1, characterized in that the upper body (2) has in each of two opposed sides at least a protuberance (8) in a sloped upward position, which rise from said perimetric projection (10), while the lower body (3) has in each of two opposed sides at least a tab (6, 6') outwardly extendeding in coincident positions with respect to those of said protuberances (8) of the upper body (2), each tab (6, 6') being provided with a transverse opening suitable to receive and house the corresponding protuberance (8).

## Patentansprüche

1. Behälter zur Herstellung von Popcorn in einem Mikrowellenherd, bestehend aus einem oberen Körper (2) und einem unteren Körper (3), in den die Maiskörner gegeben werden, beide ineinander einfügbar mittels eines umgebenden äußeren Vorsprunges (10), der im oberen Körper vorgesehen ist, und seinen unteren offenen Rand umgibt, und einer umgebenden Abstufung, die im oberen offenen Rand des unteren Körpers (3) angebracht ist und durch eine ebenfalls umgebende innere Erhebung (11) begrenzt wird, wobei der untere Körper in seiner Bodenplatte mit inneren Vertiefungen (5) versehen ist, dadurch gekennzeichnet, daß der obere Körper (2) an seiner oberen Wand eine weite Öffnung (4) besitzt, die von einer umgebenden Blendschürze, die einen festen Bestandteil der oberen Wand bildet, als Rahmen begrenzt wird, wobei der genannte obere Körper außerdem über eine Vielzahl von Löchern zur Belüftung (9) von kleiner Größe verfügt, die über seine Seitenwände auf einer umgebenden Linie auf einer mittleren Höhe verteilt sind; dadurch, daß die genannten Vertiefungen (5) des unteren Körpers (3) in der Ebene die Form eines Kreuzes annehmen und in Form eines Prismas gestaltet sind, begrenzt durch Seitenwände, die nach unten hin aufeinander zulaufen und an den Enden durch glatte dreieckige Oberflächen abgeschlossen werden, wobei die genannten Vertiefungen (5) Füße bilden und vom Mittelpunkt der Bodenplatte des unteren Körpers (3) aus zu den Ecken der genannten Bodenplatte hin ausgerichtet sind; und dadurch, daß die Höhe des oberen Körpers (2) wesentlich größer ist als die Höhe des unteren Körpers (3).

2. Behälter nach Anspruch 1, dadurch gekennzeichnet, daß der obere Körper (2) an jeder von zwei sich gegenüberliegenden Seiten mindestens einen Dorn (8) in schräg aufsteigender Position besitzt, die vom genannten umgebenden Vorsprung (10) ausgehen, während der untere Körper (3) an jeder von zwei sich gegenüberliegenden Seiten mindestens eine Zunge (6, 6') besitzt, die nach außen gerichtet sind und sich in Positionen befinden, die mit den Dornen (8) des oberen Körpers (2) übereinstimmen, wobei jede Zunge (6, 6') mit einer Queröffnung versehen ist, die dazu geeignet ist, den entsprechenden Dorn (8) aufzunehmen und zu beherbergen.

## Revendications

1. Récipient pour faire du maïs grillé dans un four à microondes, constitué d'un corps supérieur (2) et d'un corps inférieur (3) où sont déposés tes grains de maïs, s'épousant tous deux au moyen d'une saillie périmétrale externe (10) prévue au corps supérieur entourant son bord inférieur ouvert et d'un échelonnement périmétral pratiqué sur le bord supérieur ouvert du corps inférieur (3) délimité par une élévation interne (11) également périmétrale (3), le corps inférieur étant muni de creux internes (5) à sa base, qui est caractérisé en ce que le corps supérieur (2) comprend una large ouverture (4) délimitée par une jupe périmétrale en guise de cadre qui est une partie intégrante de la paroi supérieure, en comportant en outre ledit corps supérieur une pluralité de fenêtre d'aération (9), de faible dimension, distribuées sur leurs parois latérales selon une ligne périmétrale située à une hauteur intermédiaire; en ce que lesdits creux (5) du corps inférieur (3) adoptent sur le plan une forme de croix, lesquels sont configurés sous forme prismatique délimités par des parois latérales qui convergent en aval et coiffés aux extrémités par des surfaces lisses triangulaires, lesdits creux (5) formant des pattes et étant dirigés depuis le centre de la base du corps inférieur (3) vers les angles de ladite base, et en ce que la hauteur du corps supérieur (2) est substantiellement supérieure à la hauteur du corps inférieur (3).

2. Récipient selon la revendication 1, qui est caractérisé en ce que le corps supérieur (2) comprend à chacun des deux côtés en regard au moins une protubérance (8) en amont inclinée, qui s'élève depuis ladite saillie périmétrale (10), tandis que le corps inférieur (3) comprend à un des deux côtés en regard au moins une languette (6,6') qui s'étend vers l'extérieur à des positions coïncidentes avec les protubérances (8) du corps supérieur (2), chaque languette étant (6,6') prévue d'une ouverture transversale susceptible de recevoir et de loger la protubérance (8) correspondante.
